# EUROPEAN PATENT APPLICATION

(11) **EP 1 750 266 A1**
(43) Date of publication of application: **07.02.2007**
(21) Application number: 05300652.4
(22) Date of filing: 04.08.2005
(51) Int. Cl.: G11B 27/034, G11B 27/036, G11B 20/00, G11B 20/10, H04N 5/77, H04N 7/26

(54) **Method and circuit arrangement for storing digital signals on a storage medium, and a respective camcorder**

(71) Applicant: Thomson Licensing, 92100 Boulogne-Billancourt (FR)
(72) Inventor: van Geel, Martinus Wilhelmus Cornelis, 4931 VK Geertruidenburg (NL); Uijtdehaag, Joost, 4703 AZ Rosendaal (NL); Pot, Robert, 5121 EN Rijen (NL)
(74) Representative: Arnold, Klaus-Peter

(57) **Abstract**

The method for storing digital signals on a random access storage medium, which is segmented in physical blocks (Bi), comprises the steps of storing fields or frames (Fj) of a first digital signal (Video A) with a high quality on the storage medium, by using several physical blocks of the storage medium for storing one field, and, when the end of the capacity of the storage medium is reached, storing any further digital signal (Video B) in blocks, in which already the first digital signal (Video A) is recorded. Any further digital signals are stored in particular in a previously recorded lower quality layer (Q3). The storage medium is for example a hard disk, an optical disk or a semiconductor memory which can be segmented into blocks by means of a formatting procedure. The method is used in a preferred embodiment by a signal processor being arranged within a camcorder.

## Description

### FIELD OF THE INVENTION

The present invention relates to a method and a circuit arrangement for storing digital signals on a storage medium, in particular on a random access storage medium. The method and the circuit arrangement may be used for example in a professional camcorder for electronic news gathering.

### BACKGROUND

In the area of electronics news gathering a cameraman is typically working under stress, because of time pressure and competition with other cameramen. A camcorder for this market (ENG market) should therefore be lightweight and robust with easy handling, but on the other side it should have also a high recording capacity. The storage medium cannot be changed during actual news gathering for not loosing any important information, and during the action, a time schedule can never be planed in whatever way, because delays and unexpected events may happen at any time.

Camcorders for the ENG market were or are still typically tape based. Video tape is a sequential media, which allows only to read and write the information in a sequential way. When the end of the tape is reached, the capacity limit is reached. Any further information cannot be recorded immediately. For recording an additional clip, the tape has to be rewound and a part with less value has to be found, which can be overwritten. But this method has the risk of loosing footage, that should have been kept. The only real solution is changing tape, which costs time during which the cameraman is not able to follow up the actual situation.

Camcorders comprising a random access medium, for example an optical disk or a semiconductor memory storage medium, are also available already and it is expected that this technology will grow further in the professional camcorder market in accordance with the fast growth of the information technology business.

In the abstract "MPEG video transcoding to a fine-granular scalable format", Proceedings 2002 International Conference on Image Processing, vol. 1, pp I-717-20 vol. 1, published: Piscataway, NJ, USA 2002, ISBN 0780376226, the principle of elastic storage of compressed multimedia content on a random access storage medium is discussed. As described, for compressed video, additional content can be stored when the bit rate of recorded data is reduced by means of a respective bit rate transcoding technique. It is suggested to use a fine granular scalability method as proposed in the MPEG4 standard for the transcoding technique. This method allows a better picture quality and suffers less from complexity problems, when bit rate production of multiple streams is required.

### SUMMARY OF THE INVENTION

The method for storing digital signals on a random access storage medium comprises the steps of storing fields or frames of a first digital signal with a high quality on the storage medium, by using several physical blocks of the storage medium for storing one field, and when the end of the capacity of the storage medium is reached, storing any further digital signal in blocks, in which already the first digital signal is recorded.

The physical blocks in particular have an assignment with regard to different quality layers, and signal parts with a higher significance are stored in blocks of a higher quality layer and signal parts with a lower significance are stored in blocks of a lower quality level layer. As a codec for encoding the digital signals in particular the JPEG2000 standard is used, which allows an easy separation of signal parts with a higher significance and signal parts with a lower significance.

The storage medium is in particular a hard disk, an optical disk or a semiconductor memory, which each can be easily organized by means of a formatting procedure for having physical blocks of a wanted Byte size, and which have fast access times for reading and writing of the data of the respective blocks.

In a further aspect of the invention, the method for storing digital signals on a random access storage medium is performed by a signal processor, which is arranged for example within a professional camcorder. The camcorder is in a preferred embodiment a portable camcorder for the ENG market.

### BRIEF DESCRIPTION OF THE DRAWINGS

Preferred embodiments of the invention are explained now in more detail with regard to schematic drawings, which show:
- Fig. 1: data blocks of a random access storage medium, on which a first video signal is stored, and
- Fig. 2: the blocks of figure 1, on which in addition a second video signal is stored.

### DETAILED DESCRIPTION OF PREFERRED EMBODIMENTS

It is well known that a random access storage medium, for example a hard disk or a DVD, is formatted, respectively structured, into blocks on which the digital data are stored. Each block can be accessed individually via an identification address for reading and writing data, i.e. via a respective pick-up. The blocks in particular have all the same storage size. A semiconductor memory allows the random access of single data words and can be structured for having blocks corresponding with respective blocks of for example a hard disk likewise.

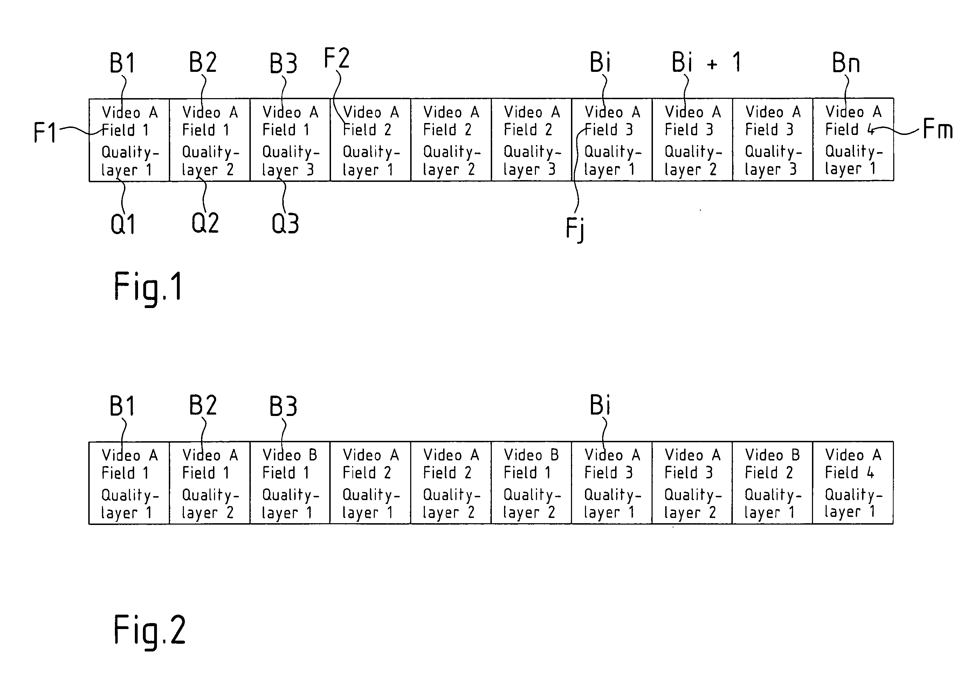

In figure 1 physical blocks Bi = B1, B2, ..., Bn of a random access storage medium are shown, on which a first video A is recorded. The video A comprises fields Fj = F1, ..., Fm being stored in the blocks Bi. In this embodiment, each field is partitioned into three parts which are stored in three respective blocks of the storage medium. Each field may correspond to one frame, or two subsequent fields may be used for establishing the pictures of the video A for a respective progressive or interlaced picture display, as known. The figure 1 therefore shows only a very small part of the storage medium, which may have for example a capacity in the GByte range.

The blocks Bi have an assignment with regard to a quality specification for the video A, which consists in this embodiment of three quality layers Q1, Q2, Q3. The quality layers allow to store video signals with different quality on the storage medium. As shown in figure 1, the video information of the video A is stored in three blocks for each field on the storage medium in a consecutive manner. The video A is stored in this embodiment with the highest possible quality on the storage medium, comprising all available information of the video A. As can be seen in figure 1, the video A is written sequentially onto the storage medium in correspondence with writing a video onto a tape.

The video A is encoded in a preferred embodiment in accordance with the JPEG2000 standard. But any other layered compression scheme may be used also. JPEG2000 uses a wavelet encoding procedure for a compression of picture respectively video data. It allows in particular a lossy compression with a very high compression rate. The coefficients of the wavelets can be arranged further such, that a small number of coefficients is sufficient for a display of the video, but with a reduced quality. When storing more and more coefficients, the quality of the video is improved. The JPEG2000 encoding allows therefore the possibility of deleting data by deleting coefficients, for reducing the picture quality without any transcoding of the video data. Deleting data can be done by simply deleting respective blocks on the random access storage medium; any additional signal processing is not required.

The capacity of the storage medium is for example such, that the storage medium is full, when the complete video A is recorded. No further blocks are available for any further storage, i.e. for recoding a second video B. Storing any further video can be made only, when already recorded blocks are overwritten. This is made, in that for each field Fj of the video A one or more quality layers are erased. This is possible because of the random access of the storage medium. This can be made with a sufficiently high bitrate, in particular, when a semiconductor memory is used. But other random access storage media allow also a random access writing of data with a very high bitrate, for example hard disks and DVDs.

In figure 2 the physical blocks of the storage medium of the figure 1 are shown, containing the video A. In addition, a second video, video B, is recorded on the storage medium, using physical blocks which contained before data being used for the video A. As shown, the quality layer Q3 of each field Fj has been replaced for writing the data of the video B onto the storage medium. The quality of the video A, for example the picture resolution, has been reduced therefore, but it is still possible to replay the video A with a sufficient quality. Because of the fast and random access of the storage medium, the blocks containing the quality layer Q3 can be accessed individually, and the recording of the video B can be made in real-time.

In a preferred embodiment, the coefficients of the video A are arranged such, that for each field the coefficients with a high significance are stored in the first quality layer Q1 and coefficients with a lower significance in the quality layers Q2, Q3, ..., the coefficients with the lowest significance for example in quality layer Q3. For such a procedure in particular an encoding of the video in accordance with the JPEG2000 standard can be used.

The video B may be recorded for example already with a lower quality, as can be seen in figure 2. For each field of the video B, only two physical blocks are used. The data of each field of the video B are therefore recorded in a non-consecutive manner, for storing the data for each field into blocks with a first quality layer Q1 and a second quality layer Q2. The quality layers Q1, Q2 are recorded therefore each alternatingly in the blocks B3i, i = 1, 2, ..., of the storage medium, as shown.

The method for storing digital signals on a random access storage medium can be applied by a signal processor, which is arranged for example within a professional camcorder. The signal processor records the video A and video B on the storage medium, as described before. For recording the video B on the blocks with the lower quality layers, for example the quality layers Q3, a lookup-table or simple calculation formulas can be used, as known from applications of random access storage media.

The random access storage medium is in particular a hard disk, an optical disk or a semiconductor memory, which each can be easily organized by means of a formatting procedure for having physical blocks of a wanted Byte size, and which have fast access times for the respective blocks. As stated above, all physical blocks have the same Byte size. A second or any further video can be recorded therefore in real-time on the blocks having a lower quality layer.

The camcorder is in a preferred embodiment a portable camcorder for the ENG market. But other applications are also possible for those skilled in the art without departing from the scope of the present invention. The invention may be used in particular also for digital still cameras, or for storing digital audio signals on a random access storage medium.

## Claims

1. Method for storing digital signals on a random access storage medium being segmented in physical blocks (Bi), **with a steps of**
storing fields (Fj) of a first digital signal (Video A) with a high quality on the storage medium, by using several physical blocks of the storage medium for storing one field, and
when the end of the capacity of the storage medium is reached, storing any further digital signal (Video B) in blocks, on which already the first digital signal (Video A) is recorded.

2. Method according to claim 1, **with the further steps of**
assigning different quality layers (Q1-Q3) to subsequent physical blocks (Bi), and
storing signal parts with a higher significance and signal parts with a lower significance of subsequent fields (Fj) in blocks of a higher, respectively lower quality layer on the storage medium.

3. Method according to claim 1 or 2, **with the further steps of**
erasing a lower quality layer (Q3) of subsequent frames of the first digital signal, and
storing the further digital signal (Video B) in the erased lower quality layer (Q3).

4. Method according to claim 1, 2 or 3, **with the further steps of**
encoding the first and the further digital signal in accordance with a layered compression scheme, in particular in accordance with the JPEG2000 standard, and
arranging the resulting coefficients according to their significance in blocks of different quality layers.

5. Method in accordance with one of the preceding claims, **wherein** the digital signal is a video signal, an audio signal or a sequence of still pictures.

6. Circuit arrangement comprising a signal processor and a storage medium for storing a digital signal comprising fields or frames, **characterized in that** the medium is segmented in blocks (Bi) having different quality layers (Q1-Q3), that the processor encodes the digital signal into signal parts with different significances, that signal parts with a higher significance are stored in blocks of a higher quality layer (Q1), that signal parts with lower significance are stored in blocks of a lower quality layer (Q3), and that, when the end of the capacity of the storage medium is reached, any further digital signal (Video B) is stored in blocks of a lower quality layer (Q3), in which already the first digital signal (Video A) is recorded.

7. Circuit arrangement according to claim 6, **wherein** the storage medium is a random access storage medium, for example a hard disc, an optical disk or a semiconductor memory, and the digital signal is a video signal, an audio signal or a sequence of still pictures.

8. Circuit arrangement according to claim 6 or 7, **wherein** the digital signal is encoded by the signal processor in accordance with a layered compression scheme, in particular in accordance with the JPEG2000 standard, and that the processor arranges the respective coefficients according to priorities.

9. Camcorder, comprising a circuit arrangement according to one of the preceding claims 6 - 8.

10. Camcorder according to claim 9, **wherein** the camcorder is a portable camcorder for the ENG market.
